# EUROPEAN PATENT APPLICATION

(11) **EP 3 474 159 A1**
(43) Date of publication of application: **24.04.2019**
(21) Application number: 17196859.7
(22) Date of filing: 17.10.2017
(51) Int. Cl.: G06F 17/30

(54) **METHOD AND SYSTEM TO DETERMINE CAPABILITIES OF BOTS**

(71) Applicant: Nokia Technologies Oy, 02610 Espoo (FI)
(72) Inventor: Theeten, Bart, Antwerpen (BE); Huysegems, Raf, Antwerpen (BE); Van Cutsem, Tom, Antwerpen (BE)
(74) Representative: Grootscholten, Johannes A.M.

(57) **Abstract**

The present disclosure relates to a system and a method of automated interaction with a chat bot, to determine whether a bot satisfies user's needs without installing the bot (i.e. befriending the bot) and having to interacting with it. To this end, systems and methods according to the present disclosure comprise/execute the steps of:
- receiving, from the chat bot, an input message;
- obtaining, from the received input message, structured message data;
- determining, based on the structured message data, whether the received input message pertains to a request for specific information; and
if it is determined that the received input messages pertains to a request for specific information:
- generating, based on the structured message data, a response message to be sent to the chat bot; and
- sending, to the chat bot, the response message to elicit an additional input message from the chat bot; and
- updating a data structure, by storing at least one of the structured message data and the response message in the data structure.

## Description

### Background of the Present Disclosure

Chat bots are becoming the new Web Sites and/or new mobile Apps. It is still early days for chat bots, but already tens of thousands of such bots have been developed over the recent years and are popping up on widely used instant messaging platforms, like Facebook Messenger, Kik, Telegram, Slack, Apple's iMessage, etc.

Also the GSMA MaaP (Messaging As A Platform) initiative focuses on building out an ecosystem of chat bots hosted by Mobile Network Operators.

### Problem

The state-of-the-art in chat bot search and retrieval on messaging platforms is similar to the situation the Web was in before automatic search engines (such as Google). To find a bot, the user either needs to search for the bot based on its name on specific instant messaging platforms (the bot's name may or may not be descriptive of what the bot does), or browse human-curated bot lists. This is very tedious for end-users, especially since whether a bot satisfies the user's needs can only be verified by "installing" the bot (i.e. be-friending the bot) and interacting with it.

This effort is time-consuming for the user, can be invasive on the user's privacy and can quickly lead to frustration. The present disclosure aims to automate the process of chat bot search and retrieval.

### Prior Art

Prior Art in crawling in the field of web sites is of course Google Search. Such prior art techniques are not applicable to crawl bots, since bots don't have a description of what they do in a plain text document, like a web page. To find out what a bot does, users need to start talking to it and therefore need techniques, subject of the present disclosure, to autonomously hold conversations with other bots.

### Brief Summary of the Present Disclosure

The present disclosure automates the problem of finding out
1) what a bot is capable of,
2) what service category the bot belongs to (e.g. travel, business, entertainment),
3) which other bots exist on a messaging platform, and
4) how a bot behaves.

To this end, then present disclosure proposes systems and methods according to at least the appended independent system and method claims.

More in particular, the system is configured to perform a method of automated interaction with a chat bot, said method comprising the steps of:
- receiving, from the chat bot, an input message;
- obtaining, from the received input message, structured message data;
- determining, based on the structured message data, whether the received input message pertains to a request for specific information; and
if it is determined that the received input messages pertains to a request for specific information:
- generating, based on the structured message data, a response message to be sent to the chat bot;
- sending, to the chat bot, the response message to elicit an additional input message from the chat bot; and
- storing at least one of the structured message data and the response message in the data structure.

Optional non-limiting feature may become apparent from the below embodiment description, and/or be defined in dependent claims.

More in particular, the system and method according to the present disclosure may involve that said steps are reiterated until a stopping criterion is met.

Further, as an additional or alternative embodiment, the step of obtaining the structured message data may comprise obtaining at least one type of structured message data of a group of types of structured message data, said group comprising: keywords, keyphrases, interactive user interface, UI, components and question information.

Further, as an additional or alternative embodiment, the step of obtaining the structured message data may comprise extracting the structured message data using a natural language understanding, NLU, engine.

Further, as an additional or alternative embodiment, the system may perform, and the method may comprise sending, to the chat bot, a keyword message containing at least one keyword, wherein the at least one keyword is associated with an intended behaviour; receiving, from the chat bot, a reply message; and determining, based on the reply message and data in the data structure, whether the reply message corresponds to the intended behaviour.

Further, as an additional or alternative embodiment, the system may perform, and the method may comprise the steps of determining, based on the structured message data, at least one conversation topic of the received input message; and classifying, based on the determined conversation topic, the chat bot according to at least one conversation topic.

Further, as an additional or alternative embodiment, the system may perform, and the method may comprise the step of determining, based on the structured message data, whether a reference is made to an additional chat bot in the received message, and further comprising at least one of:
- storing the reference that is made to an other chat bot; and
- performing the steps of any one of the foregoing claims on the an other chat bot.

### Brief Drawing Description

Following the above indications about the present disclosure through reference to the appended claims, herein below practical embodiments of the present disclosure are provided, referring to the appended drawings, wherein the same or similar elements, components and features in general may be designated using the same or similar reference signs, but where it is to be noted that the particularly shown and described embodiments are in no way to be taken as limitations on the scope of protection according to the appended claims, since the claims and no part of an embodiment description impose limitations on the scope of protection, whereas even alternatives for specific features in the claims are encompassed in the scope of the claims, although these must - in some jurisdictions be obvious alternatives. In the drawings:
Figure 1 shows an exemplary embodiment of a bot crawler system in conjunction with a messaging platform accommodating chat bots;
Figure 2 shows a potential, more detailed embodiment of a bot crawler of the system of figure 1;
Figure 3 shows a schematic representation of a communication flow according to the present disclosure;
Figure 4 shows a potential, more detailed embodiment of a conversation graph analyser component of the system of figure 1;
Figure 5 shows a potential, more detailed embodiment of a bot behaviour inspector component of the system of figure 1.

### Detailed Embodiment Description

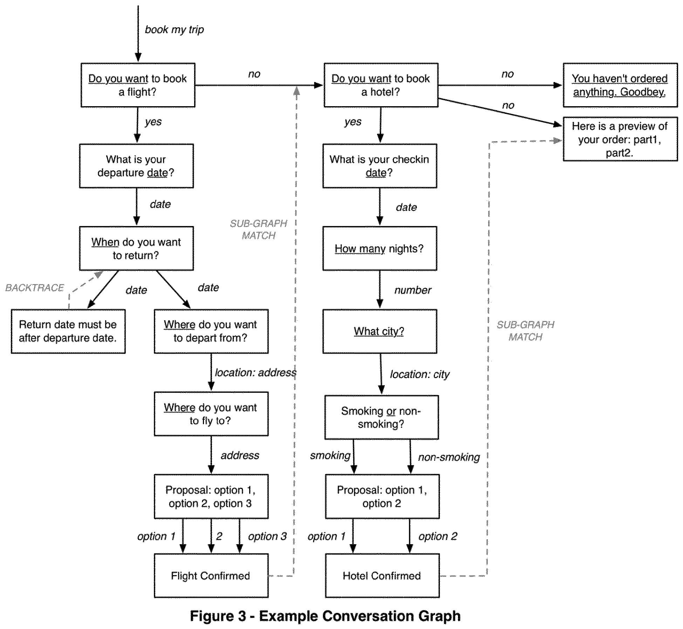

The present disclosure proposes a system 100 that is capable of autonomously "crawling" a bot, by exhaustively descending all paths in the bot's workflow (aka conversation flow - see for example figure 3), and recording this full workflow in a data structure, such as a graph. The result is a comprehensive understanding of what the bot is capable of, i.e. which sentences or keywords trigger which action to be performed by the bot.

In the process of web crawling, hyperlinks are followed. However, here in the case of bots crawling, there are no hyperlinks. Rather, the bot - at the start of a new conversation - either offers a number of options as a list of keywords or buttons that can be clicked to get the conversation started, or the bot needs to be queried for what it can do, e.g. by sending it the message 'hi', 'help' or 'what can you do?' or similar statements a human user would ask to find out what a bot is capable of. Then, the present disclosure will exhaustively send all proposed keywords to the bot in order to trigger that path of the conversation. The resulting recorded graph will allow us to find out what the bot is capable of and what service category the bot belongs to (objectives 1 and 2 above).

Objective 3 of finding out what other bots are present on the messaging platform, can be achieved in a bot-2-bot scenario. This is something current messaging platforms don't yet support, but it is clear that this will become the future in bots. Having bots cooperate to achieve a complex task is a very valuable and promising avenue, since this will allow for truly intelligent systems, behaving very much like humans do: when humans need to achieve a task, they will reach out to other people to help them with parts of the task they are not capable of solving themselves. This "reaching out" will also be captured by the bot crawler (subject of present disclosure) and will be recorded as a related bot, which will then be crawled as well. This is to some extent comparable with how web crawlers behave when encountering a hyperlink pointing to an external web site. In contrast to the present disclosure, the state-of-the-art in bot discovery relies on indexing a bot's metadata, which can then be accessed using e.g. a traditional google search (potentially pointing to a bot through deep-linking, much like how mobile apps can be found using a google search by means of their description in the app store) or on human-compiled bot lists, both requiring human effort.

Finally, the fourth objective of finding out how a bot behaves related to detecting how a bot behaves under certain pre-defined conditions, which might be important especially in a bot-to-bot scenario, where a bot needs to "play along well" in order to be useful or in which bots are expected to offer a certain conversational style (see further).

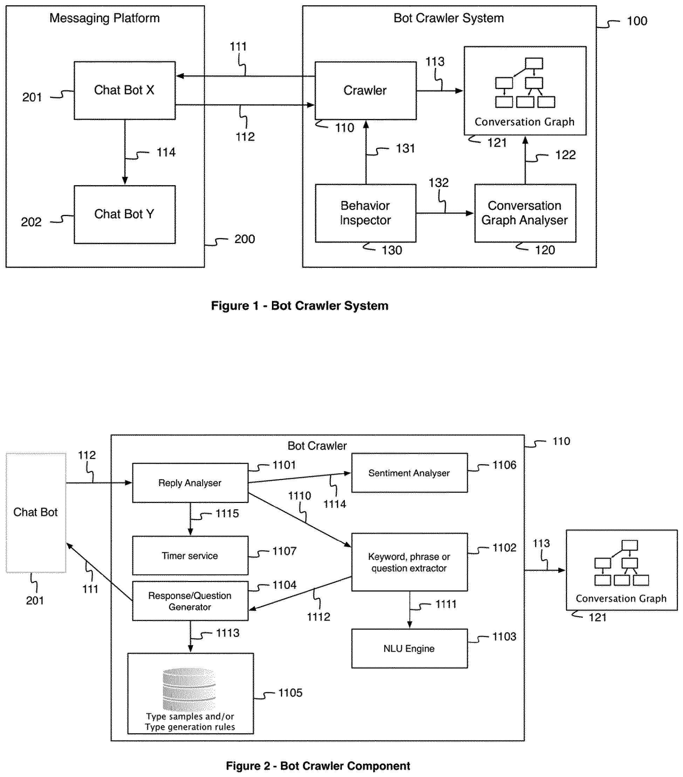

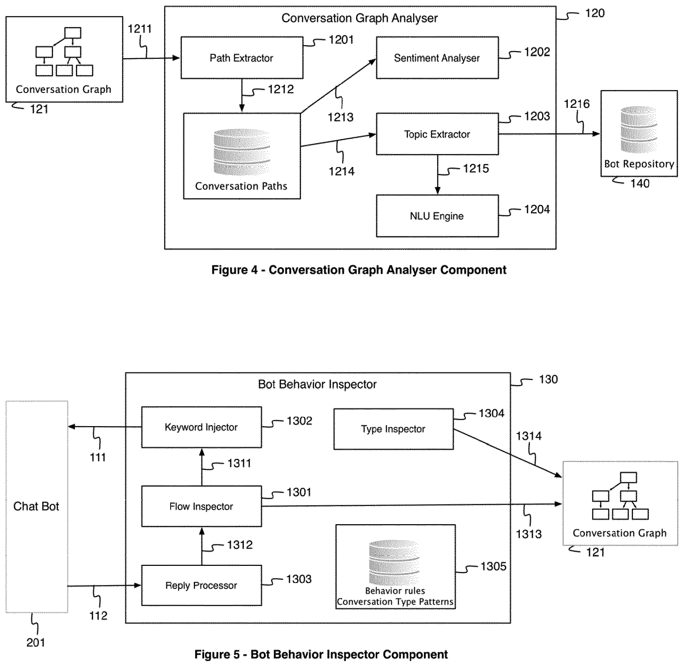

Referring to figure 1, the current present disclosure proposes a chat bot crawler system (100) that includes: a bot crawler (110; see also figure 2); a conversation graph analyser (120; see also figure 4); a bot behaviour inspector (130; see also figure 5); and a bot repository (140).

### BOT CRAWLER SYSTEM (100)

The bot crawler (110) could be a client application external to a messaging platform (200) but acting on behalf of a user of that messaging platform (200), or could be a bot by itself on a messaging platform (200) that supports bot-to-bot communication. The bot crawler (110) autonomously engages into one or more conversations with a target chat bot (201), to exhaustively descend all conversation paths that bot (201) is capable of having. While doing so, all conversation paths are recorded into a conversation graph (121), wherein each node is a message (112) from a bot (201) to the bot crawler (110) and wherein each vertex is a message from the bot crawler (110) to a bot (201).

A conversation graph analyser (120) is able to detect 1) what a bot is capable of, 2) what service category/categories the bot belongs to (e.g. travel, business, entertainment) and 3) the potential relationships a bot (201) has with one or more other bots (202) on the messaging platform (200) or some other messaging platform.

A bot behaviour inspector (130), whose role is twofold: first, to check how a bot (201) reacts to certain pre-defined keywords/phrases which intend to change the flow of the conversation (e.g. exit, restart, stop, abort, quit, bye, help, go back, skip) and second to detect what type of bot it is. Example types are:
a. product/service ordering bots: these typically start with a Q&A (Question and Answering) session to finally propose one or more offers the user could choose from, potentially followed by a payment transaction
b. subscription bots: these typically gather configuration parameters like user preferences without proposing anything to the user at the end of the conversation. These bots will use the gathered data to later autonomously deliver messages to the user that match the gathered data somehow. Examples are weather report bots, news dissemination bots, etc.
c. purely conversation keeping bots without a real end-goal. These bots are mainly used for entertainment purposes.

A bot repository serves to store information about the crawled bots, like the category of service they offer, the capabilities they exhibit and the behaviours they comply to.

More detail is provided below on each of the bot crawler (110), the conversation graph analyser (120) and the bot behaviour inspector (130).

### BOT CRAWLER (110)

To bootstrap the process, the bot crawler (110) needs to know of at least one bot reference, including the bot's username and the platform (200) the bot (201) resides on. This initial reference can be manually specified or obtained by any other means, like e.g. a deep-link obtained after visiting a web page that talks about the bot (201).

The bot crawler (110) assumes the role of an end-user of the platform (200) (e.g. a client application acting on behalf of the end-user) on which the initial bot (201) resides or could be a bot by itself if the platform (200) supports bot-to-bot communication. Figure 1 depicts the Bot Crawler System (100), including the Bot Crawler (110) as external to the Messaging Platform (200), but in another embodiment, the Bot Crawler System (100), including the Bot Crawler (110) could be internal to a messaging platform (200) as well.

First, the crawler (110) befriends the initial bot (201) - if not already implicitly done by following the deep-link - and/or sends an initial message (111) to the bot (201) to trigger a new conversation. Example initial messages are: "hi", "help", "what can you do?", "who are you?", etc. Some platforms (200), like Facebook Messenger, provide a utility button that when clicked triggers the "Get Started" message to be delivered to the bot (201).

In response to this initial message (111) from bot crawler (110) to bot (201), bot (201) sends back a reply message (112). Message (112) is analysed by the bot crawler's (110) bot reply analyser (1101) in Figure 2, whose role it is to (for each message (112) that it receives):
a) detect keywords or phrases that bot (201) is suggesting in order to get the conversation moving forward, in case message (112) is a text message. An example message (112) could be: "Ask me to book a flight, a hotel or a taxi", or "Please make your selection: fish, meat or veggie".
b) detect interactive UI components in message (112), like buttons or quick-picks, which some platforms support to be sent in replies, instead of regular text messages. Such a UI component is associated with a payload, which basically corresponds to a keyword/phrase understood by the bot, just like in a), or
c) detect a question in message (112) to which the bot crawler (110) is supposed to reply with a certain type of information, like a date, a location/address, a telephone number, an email-address, a person name, a colour, a flavour, etc.

For a) and c), the reply analyser (1101) sends (1110) the message (112) to the keyword, phrase or question extractor (1102), who uses a state-of-the-art NLU (Natural Language Understanding) engine (1103) that is specifically trained to detect suggested keywords / follow-up phrases, conversation options and questions. For a), the output (1112) from (1102) is a list of zero or more follow-up keywords and/or phrases that the bot crawler (110) can send in a next message (111) to the bot (201) to get the conversation moving forward. For c), the output (1112) from (1102) is a data type the expected answer (111) to the question (112) should conform to. The bot crawler (110) includes a response/question generator component (1104) to map a data type to a concrete answer message (111) towards bot (201). The mapping from type to a valid concrete answer is facilitated by the type samples and/or type generation rules stored in (1105). Type samples are a user-generated list of possible values for a certain type (e.g. a list of colours), type rules are functions that allow to generate a valid instance of a requested data type (e.g. a date after today or a US zip code).

For b), the process is much more trivial, since the message (112) already contains the keywords as structured data (i.e. the payload attribute of the UI element).

If the output from (1102) is an empty list, the message (112) is considered purely informational and is further ignored by the crawler (110).

Let's call each keyword, phrase or type obtained in a), b) or c) a "step" S in the conversation and the list of all steps extracted from message (112) the "step options" O, so that ∀ S: S ∈ O.

The response/question generator (1104) recursively applies the following algorithm (parameters: parent node P, step options O):
a. select the next step S in O
b. create a new node N in the conversation graph (121), as a child node of the parent node P that triggered this recursion
c. if S is a type as produced by (3), generate a valid sample for that type.
d. send the sample, keyword or phrase associated with S to bot (201) as a new message (111)
e. annotate the vertex from P to O with message (111)
f. await a message (112) from bot (201)
g. annotate node N with message (112)
h. if S was a sample and message (112) has a negative sentiment (as determined by the state-of-the-art Sentiment Analyser (1106)), it could indicate that the provided answer was not valid. Try to generate a new sample and go back to step d.
i. if message (112) does not yield new step options, consider message (112) as a purely informational message and expect another message (112) to be received soon. Therefore, start a timer (1115), managed by the Timer Service (1107) and go back to step e. If the timer expires, stop this recursion.
j. if message (112) yields new step options O', recurse with parent node N and step options O'

When the algorithm stops, all possible paths have been traversed and a full conversation graph (121) has been constructed including all possible conversation steps through the bot (201). The data flow graph may be considered comparable with a site map in the WWW world. See Figure 3 for an example Conversation Graph (121).

Optimizations can include loop detection, similar subgraph detection, etc. The above algorithm could be constrained to a maximum number of recursions, so as to avoid infinite loops.

Note: The NLU (Natural Language Understanding) Engine (1103) is considered to be a state-of-the-art component, like luis.ai, wit.ai, api.ai or Google's SyntaxNet and is therefore not further detailed in this disclosure, but the technical meaning is incorporated in the present disclosure through reference. Also the Sentiment Analyser (1106) can be constructed based on state-of-the-art technology like the python NLTK (Natural Language Toolkit) library (http://www.nltk.org/_modules/nltk/sentiment/util.html) or the Stanford parser (https://nlp.stanford.edu/sentiment/).

### CONVERSATION GRAPH ANALYSER (120)

Referring to Figure 4, the Path Extractor (1201) of the Conversation Graph Analyser (120) takes as input (1211) a conversation graph (121), see example in Figure 3, and produces all paths between the initial message (111) and all leaf nodes in the graph. The union of the sentences associated with all nodes and vertices of each path, correspond to a full conversation path with the bot (201).

For each such conversation path, the Conversation Graph Analyser (120) applies its embedded state-of-the-art sentiment analyser (1202) to detect the sentiment of that conversation. A conversation that ends with a positive sentiment is considered a successful one, while one with a negative sentiment is further ignored since it is likely that it did not produce a desired result. Next, the Topic Extractor (1203) determines what the conversation is about, by applying a state-of-the-art NLU (Natural Language Understanding) Engine (1204) that is specifically trained for detecting what the topic is of each sentence in the conversation. If the sentiment of the conversation ends positively, the bot (201) is tagged with the topic(s) extracted by the Topic Extractor (1203), in the Bot Repository (140). Tagging a bot (201) with a topic, means the bot (201) is capable of holding conversations about that topic. This addresses the first objective of determining what the bot (201) is capable of.

After all paths have been processed, the bot (201) is annotated with all topics it can hold a conversation about. This set of topics is later used to categorize all bots crawled through the system, subject of this present disclosure. Categories are determined out of lists of topics using state-of-the-art clustering techniques. This addresses the second objective of determining what service category the bot (201) belongs to.

Whenever an incoming message (112) mentions another bot (202), it means that bot (201) reaches out to another bot (202). An example message (112) mentioning another bot (202) could be: "@airline-bot: book a flight". This corresponds to an external reference to another bot (202) on the same or another messaging platform, i.e. the third objective above. The bot crawler system (100) will thereafter also crawl the other bot (202), if not already done.

### BOT BEHAVIOUR INSPECTOR (130)

Referring to Figure 5, the Bot Behaviour Inspector (130) is composed of a Flow Inspector (1301), a Type Inspector (1304), a Keyword Injector (1302), a Reply Processor (1303) and a database (1305) containing behavioural rules and conversation type patterns. The Flow Inspector (1301) uses (1311) the Keyword Injector (1302) to deliver messages (111) to the bot (201) that have the intention to change the flow of the conversation, like to go back a step, quit the conversation, restart the conversation, etc. Example keywords are: exit, restart, stop, abort, quit, bye, help, go back, skip. When the bot (201) replies to such a message, the Reply Processor (1303) delivers (1312) the message (112) to the Flow Inspector (1301), who looks up (1313) that message (112) in the Conversation Graph (121), to see whether there is a node in Conversation Graph (121) that is similar to the message (112). As an example, the Flow Inspector (1301) will decide that the bot (201) exhibits the intended behaviour to messages like "go back", when the Conversation Graph (121) has a parent node with annotated message similar to the one that was sent as a message (111), right before the message "go back" was injected by the Keyword Injector (1302). Similarly, the Flow Inspector (1301) will decide that the bot (201) exhibits the intended behaviour to message like "restart", when the message (112) received by the Reply Processor (1303) is similar to the message associated with the root node in the Conversation Graph (121). The rules, that describe the intended behaviour in response to sending certain key words, are stored in the Behaviour rules database (1305).

The Type Inspector (1304) does not need to interact with the bot (201), but rather analyses the Conversation Graph (121) to match each conversation path to predefined conversational patterns, stored in the Conversation Type Patterns database (1305). An example pattern could be: welcome message, followed by n >= 1 questions, followed by an offer message. This example pattern would indicate that the conversation starts with a Q&A (Question and Answering) session and finally produces an offer which should be accepted or rejected by the user (e.g. order placement bots such as airline bookings, flower shops, ...).

Advantages of the present disclosure are:
1. The process of finding out what a bot is capable of, what category it belongs to, what other bots it potentially refers to and how it behaves is fully automated. No human intervention is necessary, saving many hours of human effort.
2. Since the process is automated, all bots will be analysed using the same mechanism, so that the information gathered is consistent across bots and can therefore be used to reliably compare one bot to another.
3. If the crawling process is repeated at regular intervals (similar to web crawling), changes in bot behaviour or functionality can more quickly be captured and made available to end-users, making future search results more relevant.

Based on the foregoing embodiment description, it is clear that the present disclosure relates to specific embodiments for the sake of a sufficient disclosure, but that these specifically disclosed embodiments can and should not impose limitations on the scope of protection as defined in the appended claims, and in particular in the independent claims. Many alternatives will readily present themselves to a person of average skill in the relevant technical field, which are all encompassed in the scope of protection according to the appended claims, including in some jurisdictions even obvious alternatives for features in the independent claims, unless such embodiments are significantly distinct from the claimed embodiments.

## Claims

1. A method of automated interaction with a chat bot, said method comprising the following steps:
- receiving, from the chat bot, an input message;
- obtaining, from the received input message, structured message data;
- determining, based on the structured message data, whether the received input message pertains to a request for specific information; and
if it is determined that the received input messages pertains to a request for specific information:
- generating, based on the structured message data, a response message to be sent to the chat bot;
- sending, to the chat bot, the response message to elicit an additional input message from the chat bot; and
- updating a data structure, by storing at least one of the structured message data and the response message in the data structure.

2. The method according to claim 1, wherein said steps are reiterated until a stopping criterion is met.

3. The method according to claim 1 or 2, wherein the step of obtaining the structured message data comprises obtaining at least one type of structured message data of a group of types of structured message data, said group comprising: keywords, keyphrases, interactive user interface, UI, components and question information.

4. The method according to any one of the foregoing claims, wherein the step of obtaining the structured message data comprises extracting the structured message data using a natural language understanding, NLU, engine.

5. The method according to any one of the foregoing claims, further comprising:
- sending, to the chat bot, a keyword message containing at least one keyword, wherein the at least one keyword is associated with an intended behaviour;
- receiving, from the chat bot, a reply message; and
- determining, based on the reply message and data in the data structure, whether the reply message corresponds to the intended behaviour.

6. The method according to any one of the foregoing claims, further comprising the steps of determining, based on the structured message data stored in the data structure, at least one conversation topic of the received input message; and
classifying, based on the determined conversation topic, the chat bot according to at least one conversation topic, to determine properties and/or capabilities of the chat bot.

7. The method according to any one of the foregoing claims, further comprising the step of determining, based on the structured message data stored in the data structure, whether a reference is made to an additional chat bot in the received message, and further comprising at least one of:
- storing the reference that is made to an other chat bot; and
- performing the steps of any one of the foregoing claims on the an other chat bot.

8. A bot crawler system, comprising at least a processor and an I/O, wherein at least the processor is configured to:
- receive, from the chat bot, an input message;
- obtain, from the received input message, structured message data;
- determine, based on the structured message data, whether the received input message pertains to a request for specific information; and
if it is determined that the received input messages pertains to a request for specific information:
- generate, based on the structured message data, a response message to be sent to the chat bot; and
- send, to the chat bot, the response message to elicit an additional input message from the chat bot; and
- update a data structure, by storing at least one of the structured message data and the response message in the data structure.

9. The bot crawling system according to claim 8, wherein at least the processor of the system is further configured to reiterate said steps until a stopping criterion is met.

10. The bot crawler system according to claim 8 or 9, wherein at least the processor of the system is further configured to obtain at least one type of structured message data of a group of types of structured message data, said group comprising: keywords, keyphrases, interactive UI components and question information.

11. The bot crawler system according to any one of the foregoing claims, wherein at least the processor of the system is further configured to extract, from the input message, structured message data using a natural language understanding, NLU, engine.

12. The bot crawler system according to any one of the foregoing claims, wherein at least the processor of the system is further configured to:
- send, to the chat bot, a keyword message containing at least one keyword, wherein the at least one keyword is associated with an intended behaviour;
- receive, from the chat bot, a reply message; and
- determine, based on the reply message and data in the data structure, whether the reply message corresponds to the intended behaviour.

13. The bot crawler system according to any one of the foregoing claims, wherein at least the processor of the system is further configured to determine, based on the structured message data stored in the data structure, at least one conversation topic of the received input message; and classify, based on the determined conversation topic, the chat bot according to at least one conversation topic, to determine and/or capabilities of the chat bot.

14. The bot crawler system according to any one of the foregoing claims, wherein at least the processor of the system is further configured to determine, based on the structured message data stored in the data structure, whether a reference is made to an additional chat bot in the received message, and to perform at least one of:
- store the reference that is made to an other chat bot; and
- perform the steps of any one of the foregoing claims on the other chat bot.

15. A computer program product comprising computer-executable program instructions for performing, when executed on a computer, the method of any one of claims 1 to 7.

## Amended claims

### Amended claims in accordance with Rule 137(2) EPC.

1. A method of automated interaction with a chat bot, said method comprising the following steps:
- receiving, from the chat bot, an input message;
- obtaining, from the received input message, structured message data;
- determining, based on the structured message data, whether the received input message pertains to a request for specific information; and
if it is determined that the received input messages pertains to a request for specific information:
- generating, based on the structured message data, a response message to be sent to the chat bot;
- sending, to the chat bot, the response message to elicit an additional input message from the chat bot; and
- updating a data structure, by storing at least one of the structured message data and the response message in the data structure.

2. The method according to claim 1, wherein said steps are reiterated until a stopping criterion is met.

3. The method according to claim 1 or 2, wherein the step of obtaining the structured message data comprises obtaining at least one type of structured message data of a group of types of structured message data, said group comprising: keywords, keyphrases, interactive user interface, UI, components and question information.

4. The method according to any one of the foregoing claims, wherein the step of obtaining the structured message data comprises extracting the structured message data using a natural language understanding, NLU, engine.

5. The method according to any one of the foregoing claims, further comprising:
- sending, to the chat bot, a keyword message containing at least one keyword, wherein the at least one keyword is associated with an intended behaviour;
- receiving, from the chat bot, a reply message; and
- determining, based on the reply message and data in the data structure, whether the reply message corresponds to the intended behaviour.

6. The method according to any one of the foregoing claims, further comprising the steps of determining, based on the structured message data stored in the data structure, at least one conversation topic of the received input message; and
classifying, based on the determined conversation topic, the chat bot according to at least one conversation topic, to determine properties and/or capabilities of the chat bot.

7. The method according to any one of the foregoing claims, further comprising the step of determining, based on the structured message data stored in the data structure, whether a reference is made to an additional chat bot in the received message, and further comprising at least one of:
- storing the reference that is made to an other chat bot; and
- performing the steps of any one of the foregoing claims on the an other chat bot.

8. A bot crawler system, comprising at least a processor and an I/O, wherein at least the processor is configured to:
- receive, from the chat bot, an input message;
- obtain, from the received input message, structured message data;
- determine, based on the structured message data, whether the received input message pertains to a request for specific information; and
if it is determined that the received input messages pertains to a request for specific information:
- generate, based on the structured message data, a response message to be sent to the chat bot; and
- send, to the chat bot, the response message to elicit an additional input message from the chat bot; and
- update a data structure, by storing at least one of the structured message data and the response message in the data structure.

9. The bot crawling system according to claim 8, wherein at least the processor of the system is further configured to reiterate said steps until a stopping criterion is met.

10. The bot crawler system according to claim 8 or 9, wherein at least the processor of the system is further configured to obtain at least one type of structured message data of a group of types of structured message data, said group comprising: keywords, keyphrases, interactive UI components and question information.

11. The bot crawler system according to any one of the foregoing claims, wherein at least the processor of the system is further configured to extract, from the input message, structured message data using a natural language understanding, NLU, engine.

12. The bot crawler system according to any one of the foregoing claims, wherein at least the processor of the system is further configured to:
- send, to the chat bot, a keyword message containing at least one keyword, wherein the at least one keyword is associated with an intended behaviour;
- receive, from the chat bot, a reply message; and
- determine, based on the reply message and data in the data structure, whether the reply message corresponds to the intended behaviour.

13. The bot crawler system according to any one of the foregoing claims, wherein at least the processor of the system is further configured to determine, based on the structured message data stored in the data structure, at least one conversation topic of the received input message; and classify, based on the determined conversation topic, the chat bot according to at least one conversation topic, to determine and/or capabilities of the chat bot.

14. The bot crawler system according to any one of the foregoing claims, wherein at least the processor of the system is further configured to determine, based on the structured message data stored in the data structure, whether a reference is made to an additional chat bot in the received message, and to perform at least one of:
- store the reference that is made to an other chat bot; and
- perform the steps of any one of the foregoing claims on the other chat bot.

15. A computer program product comprising computer-executable program instructions for performing, when executed on a computer, the method of any one of claims 1 to 7.
